(19) Europäisches Patentamt / European Patent Office / Office européen des brevets

(11) **EP 2 947 032 B1**

(12) **EUROPEAN PATENT SPECIFICATION**

(45) Date of publication and mention
of the grant of the patent:
**31.08.2016 Bulletin 2016/35**

(51) Int Cl.:
**B65G 35/00** *(2006.01)*          **B65G 43/08** *(2006.01)*
**B65G 47/28** *(2006.01)*

(21) Application number: **15160211.7**

(22) Date of filing: **23.03.2015**

(54) **Method for transporting objects**

Verfahren zum Transport von Objekten

Procédé pour le transport d'objets

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.05.2014 JP 2014104376**

(43) Date of publication of application:
**25.11.2015 Bulletin 2015/48**

(73) Proprietor: **Panasonic Intellectual Property
Management Co., Ltd.
Osaka-shi, Osaka 540-6207 (JP)**

(72) Inventors:
• **Higuchi, Katsuhiro
Osaka, 540-6207 (JP)**
• **Kubo, Hiroyasu
Osaka, 540-6207 (JP)**
• **Kamatani, Ryoichi
Osaka, 540-6207 (JP)**
• **Iwabuchi, Hiroshi
Osaka, 540-6207 (JP)**
• **Ishikawa, Tetsuya
Osaka, 540-6207 (JP)**

(74) Representative: **Vigand, Philippe et al
Novagraaf International SA
3 chemin de l'Echo
1213 Onex Geneva (CH)**

(56) References cited:
**WO-A1-2007/052818     US-A- 4 244 459**

**Description**

**TECHNICAL FIELD**

The present invention relates to a method for transporting a plurality of objects according to the preamble of claim 1 to a subsequent process, in which the objects are arranged in a single line and transported one by one to the subsequent process at time intervals of at least a predetermined length.

**BACKGROUND ART**

The recent economic activities characterized by mass production, mass consumption, and mass disposal are causing global environmental issues such as global warming and resource depletion.

Under such circumstances, in order to create a recycling-oriented society, Japan has adopted the Home Appliance Recycling Law which requires recycling of used products such as air conditioners, TVs, refrigerators, freezers, and washing machines.

These household electrical appliances are crushed into pieces of different shapes and sizes for recycling at recycling plants. Such crushed objects are desired to be arranged in a single line and transported to a sorting process, which follows the crushing process, one by one at a distance of at least a predetermined length so that the crushed objects can be sorted by an automated machine according to their material.

One conventional device for transporting objects arranged in a single line is a cylindrical transporting device for bolts or other similar objects (see, for example, Japanese Unexamined Patent Publication No. 2011-162339). FIG. 10 is a top view of this conventional device while the device is transporting some bolts.

The conventional device includes cylindrical members 101 and 102, and a driving device (not shown). Cylindrical members 101 and 102 are provided as a left and right pair with a clearance therebetween, which is large enough to prevent bolts 103 as transporting objects from falling down. Cylindrical members 101 and 102 are disposed so that an upper virtual plane formed of their upper peripheral lines of cylindrical members 101 and 102 is inclined such that the feed direction end is low. The driving device rotates cylindrical members 101 and 102 in opposite directions to each other.

The rotation of cylindrical members 101 and 102 reduces the frictional resistance between bolts 103 and members 101, 102. Then a component force of gravity allows bolts 103 to be transported downstream on cylindrical members 101 and 102.

A method for transporting a plurality of objects according to the preamble of claim 1 is disclosed in the patent application with the member WO 2007/052818 A1.

**SUMMARY OF THE INVENTION**

The present invention is directed to provide a method for transporting objects to a subsequent process, in which the objects of different shapes and sizes such as those crushed for recycling are arranged in a single line and transported one by one to the subsequent process at time intervals of at least a predetermined length.

The method for transporting objects to the subsequent process according to the present invention is as stated in claim 1. The rollers are spaced from each other by a clearance having a constant width, and each of the rollers gradually increases in diameter from a first end to a second end. The objects are introduced at the first ends of the rollers and transported one by one to the subsequent process after passing through the second ends of the rollers by rotating the rollers in an upward direction in the clearance. This method is performed as follows. The driving device rotates the rollers to start transporting the objects. Next, an inter-object distance detection sensor detects the sizes of two objects that are closest and second closest to the subsequent process and the distance between the two objects while the two objects are being transported by the rollers. The processing control device compares the distance between the two objects with a predetermined threshold value, based on the information obtained by the inter-object distance detection sensor. Then, the processing control device determines that the distance between the two objects needs to be increased when the distance is not more than the predetermined threshold value. Meanwhile, the processing control device determines that the distance needs to be decreased when the distance exceeds the predetermined threshold value. The processing control device sends a signal for slowing the circumferential velocity of the rollers to the driving device when the distance between the two objects needs to be increased, and sends a signal for quickening the circumferential velocity to the driving device when the distance between the two objects needs to be decreased. Thus, the driving device transports the objects one by one to the subsequent process at time intervals of at least a predetermined length.

As described above, according to the method for transporting objects to the subsequent process in an aspect of the present invention, the distance between the two objects closest and second closest to the subsequent process is detected and the circumferential velocity of the rollers is adjusted so that the two objects can be transported to the subsequent process at a time interval of at least a predetermined length. This allows objects of different shapes and sizes such as those crushed for recycling to be transported one by one to the subsequent process at time intervals of at least a predetermined length.

**BRIEF DESCRIPTION OF DRAWINGS**

FIG. 1 is a schematic configuration view of a device for transporting objects according to an exemplary embodiment of the present invention;

FIG. 2 is a top view of the device for transporting objects according to the exemplary embodiment of the present invention;

FIG. 3 is a schematic diagram of an image of objects being transported, which is detected by a sensor and then analyzed by a. processor in the exemplary embodiment of the present invention;

FIG. 4 is a side view of the device for transporting objects according to the exemplary embodiment of the present invention;

FIG. 5 is a sectional view perpendicular to an X-axis direction of tapered cylindrical rollers of the device for transporting objects according to the exemplary embodiment of the present invention;

FIG. 6 is a top view of the device for transporting objects according to the exemplary embodiment of the present invention showing a force $F_u$ exerted on an object being transported on the device;

FIG. 7 is a schematic configuration view of the device for transporting objects in an example of the exemplary embodiment of the present invention;

FIG. 8 is a schematic diagram of travel distances of objects transported in ten seconds with respect to the difference in the circumferential velocity of the tapered cylindrical rollers in the example of the exemplary embodiment of the present invention;

FIG. 9 is a schematic diagram of an image of the objects being transported, which is captured by a CCD camera and then analyzed by an image processor in the example of the exemplary embodiment of the present invention; and

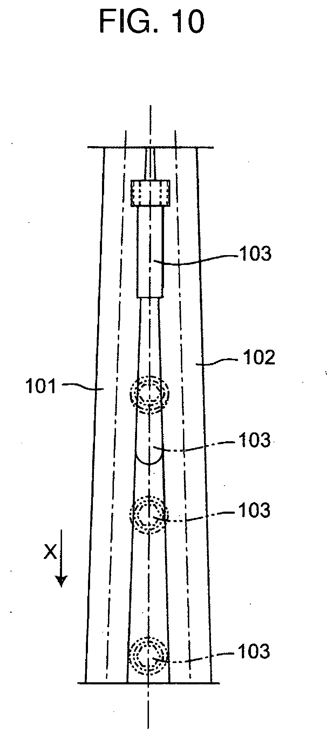

FIG. 10 is a schematic diagram of a conventional method for transporting bolts.

**DETAILED DESCRIPTION OF THE INVENTION**

Problems of the conventional method will be described prior to describing an exemplary embodiment of the present invention. The conventional method can arrange bolts 103 of the same shape and size in a single line and increase the distance between adjacent bolts 103 during the course of transportation. The conventional method, however, cannot increase the distance between objects crushed for recycling. This is because such objects are different in shape and size, causing the frictional resistance between the transporting device and each crushed object to be different. Therefore, it is impossible to transport the crushed objects to the subsequent process at time intervals of at least a predetermined length.

Hereinafter, the method for transporting objects according to the exemplary embodiment of the present invention will be described with reference to the accompanying drawings first, followed by the operation of a device for transporting objects.

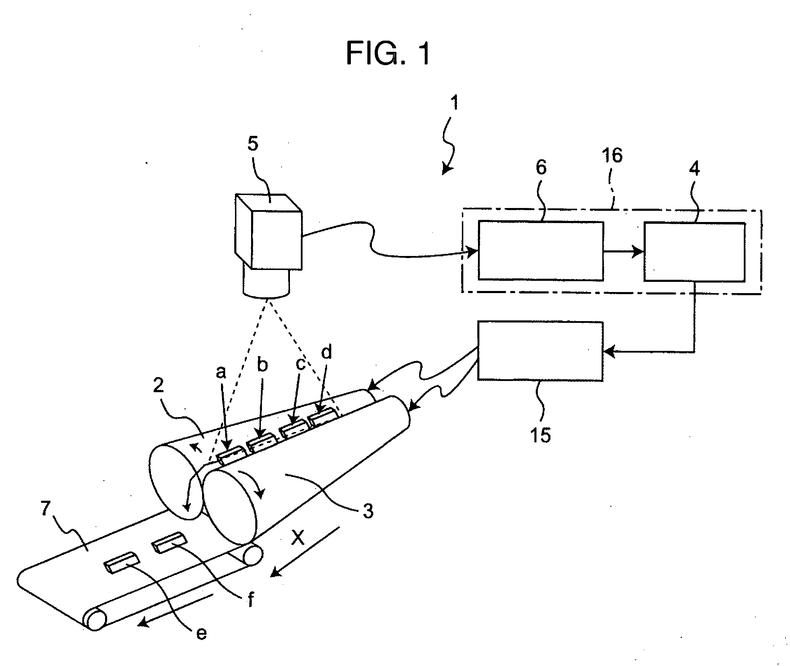

FIG. 1 is a schematic configuration view of device 1 for transporting objects, which implements the method for transporting objects according to the exemplary embodiment of the present invention.

Device 1 includes a pair of tapered cylindrical rollers (hereinafter, rollers) 2 and 3, driving device 15 such as a motor, drive control device 4, inter-object distance detection sensor (hereinafter, sensor) 5, and information processor 6. Driving device 15 drives rollers 2 and 3. Drive control device 4 adjusts the circumferential velocity of rollers 2 and 3. Sensor 5 recognizes objects "a", "b", "c", and "d" being transported. Information processor 6 processes data (information) recognized by sensor 5. Drive control device 4 and information processor 6 are collectively referred to as processing control device 16.

In FIG. 1, the transporting direction of the objects "a" to "d" is referred to as the X-axis. Rollers 2 and 3 rotate in the direction corresponding to the upward direction inn clearance 8 formed between these rollers 2 and 3. More specifically, in FIG. 1, the left-hand roller 2 rotates counterclockwise, whereas the right-hand roller 3 rotates clockwise. Thus, rollers 2 and 3 rotate in opposite directions and synchronously with each other at an equal circumferential velocity.

Sensor 5, which is disposed above the longitudinal center of rollers 2 and 3, can detect (recognize) objects in a predetermined area near clearance 8 between rollers 2 and 3. Sensor 5 recognizes each of the objects "a" to "d", and sends the recognition results to information processor 6. Information processor 6 analyzes the position and length of each of the objects "a" to "d" in the X-axis direction based on the information about the recognition results of sensor 5. On the basis of the analysis results of information processor 6, drive control device 4 generates a drive control signal, which allows the objects "a" to "d" to be transported one by one to a subsequent process (for example, the belt conveyor for the subsequent process) 7 at time intervals of at least a predetermined length. Drive control device 4 then sends the drive control signal to driving device 15. Driving device 15 transports the objects "a" to "d" arranged in a single line one by one to subsequent process 7, while changing the circumferential velocity of rollers 2 and 3 based on the drive control signal received from drive control device 4. In FIG. 1, the objects "e" and "f" on belt conveyor 7 indicate those transported earlier than the object "a".

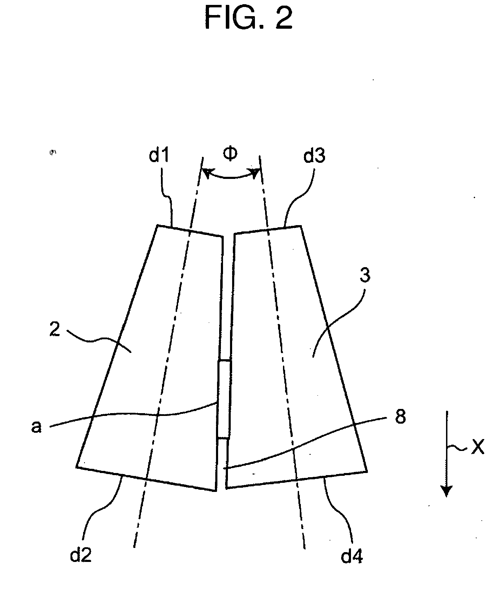

FIG. 2 is a top view of rollers 2 and 3 of device 1 according to the exemplary embodiment of the present invention. Rollers 2 and 3 are identical in shape and size, and have a diameter increasing from the object introduction side to the subsequent-process side (in a downward direction in FIG. 2). More specifically, assume that roller 2 has an end face with a diameter d1 on the object introduction side and another end face with a diameter d2 on the subsequent-process side, and that roller 3 has an end face with a diameter d3 on the object introduction side and another end face with a diameter d4 on the subsequent-process side. In this case, the following relation is satisfied: d1 = d3, d2 = d4, d2 > d1, and d4 > d3.

Rollers 2 and 3 are disposed at an axis angle φ therebetween so that clearance 8 therebetween can prevent the objects "a" to "d" from falling down and have a constant width.

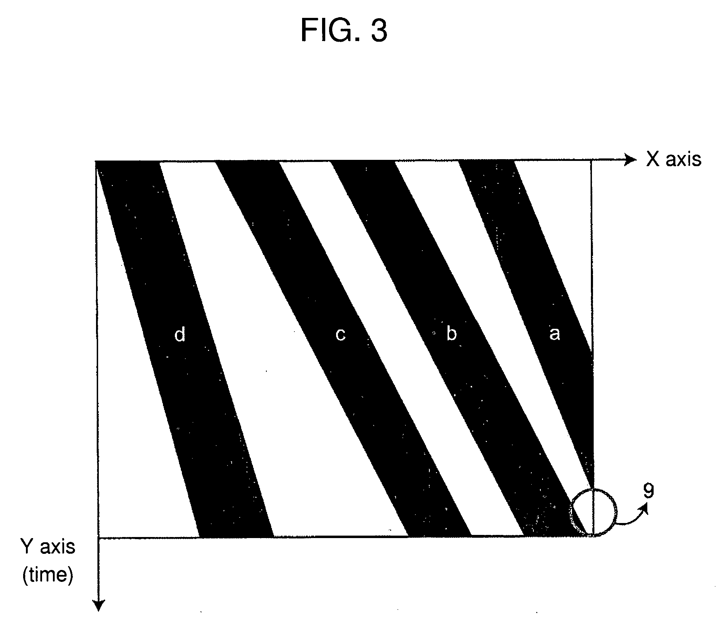

FIG. 3 shows an image of results of information processor 6 obtained by analyzing the information of the objects "a" to "d" detected by sensor 5. In FIG. 3, the horizontal axis represents the position of each of the objects "a" to "d" in the X-axis direction, and the vertical axis represents the elapsed time for transportation of the objects "a" to "d". The reference mark "a" in FIG. 3 represents the object "a" being transported. The width in the X-axis direction represents the length of the object "a" in the transporting direction X and also indicates that the object "a" is moving in the X-axis direction with time. This holds true for the reference marks "b", "c", and "d".

Information processor 6 analyzes, from this image, distance 9 between the objects "a" and "b" which are closest and second closest, respectively, to the subsequent-process side, among the objects "a" to "d" moving on rollers 2 and 3. After the object "a" is transported to subsequent process 7, in the case of increasing the distance between the objects "a" and "b" in the X-axis direction, drive control device 4 sends a drive control signal for slowing the circumferential velocity of rollers 2 and 3 to driving device 15. In contrast, in the case of decreasing the distance between the objects "a" and "b" in the X-axis direction, drive control device 4 sends a drive control signal for quickening the circumferential velocity of rollers 2 and 3. Thus, the supplying interval between the objects "a" and "b" can be adjusted by changing the movement velocity of the object "b" and further by reversing the movement direction of the object "b".

Information processor 6 compares the distance between the objects "a" and "b" with a predetermined threshold value, as an example. Information processor 6 then determines that the distance between these objects should be increased when the distance is not more than the predetermined threshold value, and determines that the distance should be decreased when the distance exceeds the threshold value. When subsequent process 7 is, for example, a sorting process using an automatic sorting device, the term "predetermined threshold value" indicates the minimum magnitude of the distance between objects being transported required for accurately sorting objects. The predetermined threshold value may be either a single value or a value range.

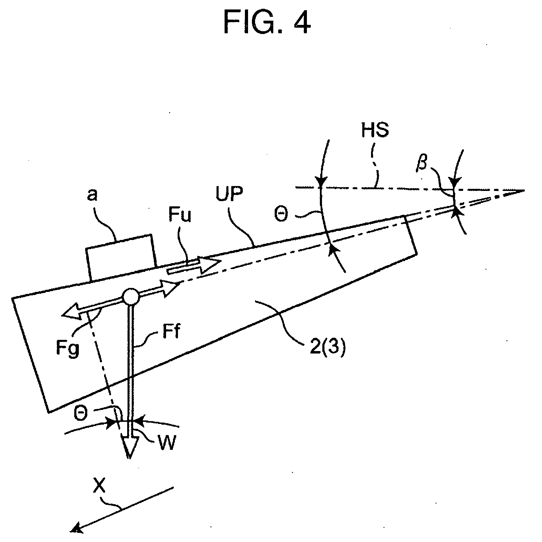

FIG. 4 is a side view of roller 2 or 3 of device 1 according to the exemplary embodiment of the present invention. The axes of rotation of rollers 2 and 3 are inclined so that a horizontal plane (for example, the floor surface) HS and the upper end lines UP of the peripheral surfaces of rollers 2 and 3 can form an inclination angle β therebetween. Consequently, the end of the subsequent-process side of rollers 2 and 3 is lower than the end of the object introduction side.

The object "a" is sandwiched and held between the upper portions of the peripheral surfaces of rollers 2 and 3. The transporting direction X of the object "a" has a traveling angle θ with respect to the horizontal plane HS in the downward direction.

The traveling angle θ satisfies a relation of $0° < θ \leq 40°$.

The object "a" does not move in the transporting direction X when $θ \leq 0°$ is satisfied. When $θ > 40°$ is satisfied, almost all objects fall off rollers 2 and 3 regardless of their size or weight.

However, when the objects "a" to "d" are highly likely to roll over because of, for example, being nearly spherical, it is preferable that the traveling angle θ be in a range of smaller angle within the range of $0° < θ \leq 40°$.

The following is a description of a mechanism of how the object "a" as a processing target moves on rollers 2 and 3 in the transporting direction X or in the reverse direction according to the circumferential velocity of rollers 2 and 3. This holds true for the objects "b" to "d".

A component force $F_g$ of the load exerted on the object "a" can be expressed as follows:

$$F_g = W \cdot \sin θ \qquad (1)$$

where W is the weight of the object "a".

A friction force $F_f$, which is exerted on the object "a" in the direction opposite to the component force $F_g$ of the load, can be expressed as follows:

$$F_f = \mu \cdot W \cdot \cos \theta \qquad (2)$$

where $\mu$ is a dynamic friction coefficient.

A propulsive force F, which is exerted on the object "a", can be expressed as follows:

$$F = F_g - F_f - F_u \qquad (3)$$

where $F_u$ is a force exerted in the direction opposite to the transporting direction X by the rotation of rollers 2 and 3.

The object "a" moves in the transporting direction X when $F > 0$, and moves in the direction opposite to the direction X when $F < 0$.

The following is a description of the force $F_u$ exerted in the direction opposite to the transporting direction X by the rotation of rollers 2 and 3.

First, a component force $W_u$, exerted in the direction perpendicular to the transporting direction X, of the load applied to the object "a" can be expressed as follows:

$$W_u = W \cdot \cos \theta \qquad (4)$$

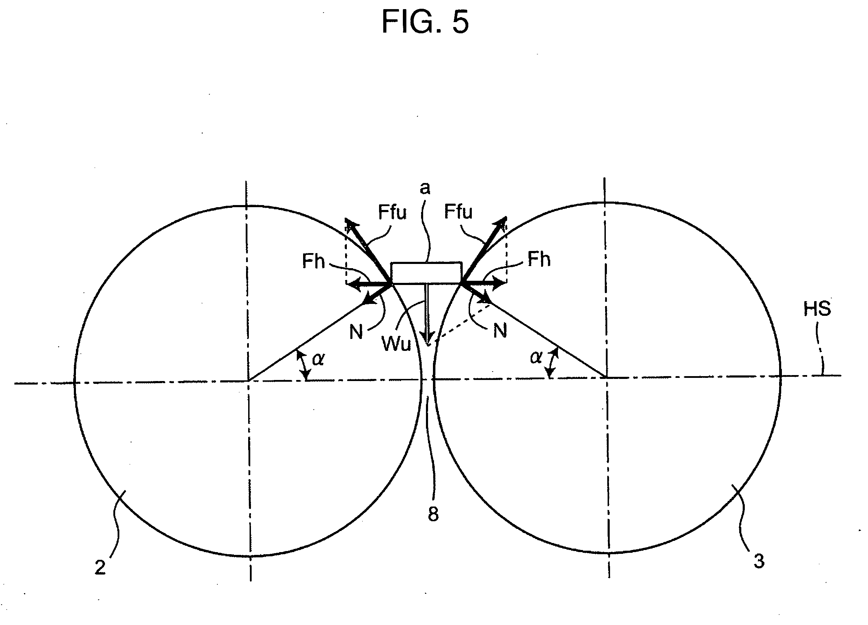

FIG. 5 is a sectional view of rollers 2 and 3 perpendicular to the X-axis direction. The force with which the object "a" pushes rollers 2 and 3 (i.e. normal force) N can be expressed as follows:

$$N = W_u / 2 \cdot \sin \alpha \qquad (5)$$

where $\alpha$ is the contact angle formed between the horizontal plane HS and a straight line connecting the central axis of each of rollers 2 and 3 with the contact point between the object "a" and each of rollers 2 and 3.

A friction force $F_{fu}$, which is exerted on the object "a" during the rotation of rollers 2 and 3, can be expressed as follows:

$$F_{fu} = \mu \cdot N = \mu \cdot W_u / 2 \cdot \sin \alpha \qquad (6)$$

where $\mu$ is a dynamic friction coefficient.

A component force $F_h$, in the horizontal direction, of the friction force $F_{fu}$ can be expressed as follows:

$$F_h = F_{fu} \cdot \sin \alpha = \mu \cdot W_u / 2 \qquad (7)$$

Thus, the component force $F_h$ in the horizontal direction is a constant value independent of the contact angle $\alpha$.

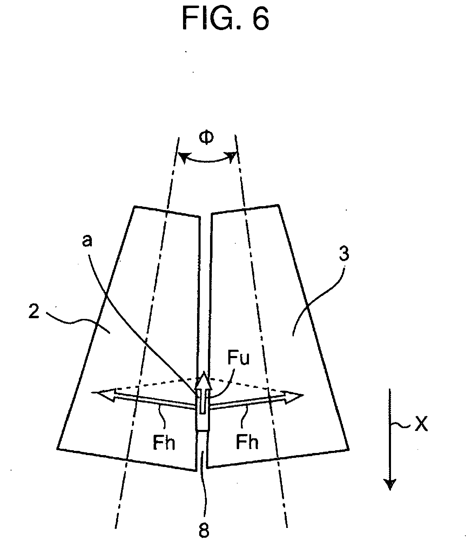

FIG. 6 is a top view showing the force $F_u$ exerted on the object "a" being transported. The force $F_u$, which is a component force of the force $F_h$ exerted on the object "a", can be expressed as follows:

$$F_u = F_h \cdot \varphi = \mu \cdot \varphi \cdot W_u / 2 \qquad (8)$$

From the relation of $W_u = W \cdot \cos \theta$, the force $F_u$ can also be expressed as follows:

$$F_u = \mu \cdot \varphi \cdot W \cdot \cos \theta / 2 \qquad (9)$$

Because the propulsive force exerted on the object "a" in the transporting direction X can be expressed as $F = F_g - F_f - F_u$, the above formula can be transformed as follows:

$$F = W \cdot \sin \theta - \mu \cdot W \cdot \cos \theta - \mu \cdot \varphi \cdot \cos \theta/2$$

$$= W \cdot \cos \theta \, (\tan \theta - \mu \, (1 + \varphi/2)) \qquad (10)$$

Therefore, the object "a" moves in the transporting direction X when $\tan \theta > \mu \, (1 + \varphi2)$, and moves in the direction opposite to the direction X when $\tan \theta < \mu(1 + \varphi2)$.

It is generally known that the dynamic friction coefficient decreases with increasing moving velocity of an object. When this theory is applied to the present exemplary embodiment, the dynamic friction coefficient $\mu$ decreases with increasing the circumferential velocity of rollers 2 and 3, allowing the object "a" to move in the transporting direction X. In contrast, the dynamic friction coefficient $\mu$ increases with decreasing the circumferential velocity of rollers 2 and 3, allowing the object "a" to move in the direction opposite to the direction X.

The following is a description of configuration for the object "a" to stay still on device 1 when rollers 2 and 3 are stopped.

Assume that rollers 2 and 3 have a static friction coefficient $\mu_0$. When rollers 2 and 3 are stopped, the force $F_u$ generated by the rotation becomes 0. The above formula (3) can be transformed as follows:

$$F = F_g - F_f = W \cdot \sin \theta - \mu_0 \cdot W \cdot \cos \theta$$

$$= W(\sin \theta - \mu_0 \cdot \cos \theta) \qquad (11)$$

When rollers 2 and 3 are stopped, the object "a" can be stopped under the condition that the propulsive force $F < 0$. Therefore, rollers 2 and 3 must be made of a material that satisfies the following formula:

$$F = W \cdot \sin \theta - \mu_0 \cdot W \cdot \cos \theta < 0$$

$$\mu_0 > \tan \theta \qquad (12)$$

## EXAMPLE

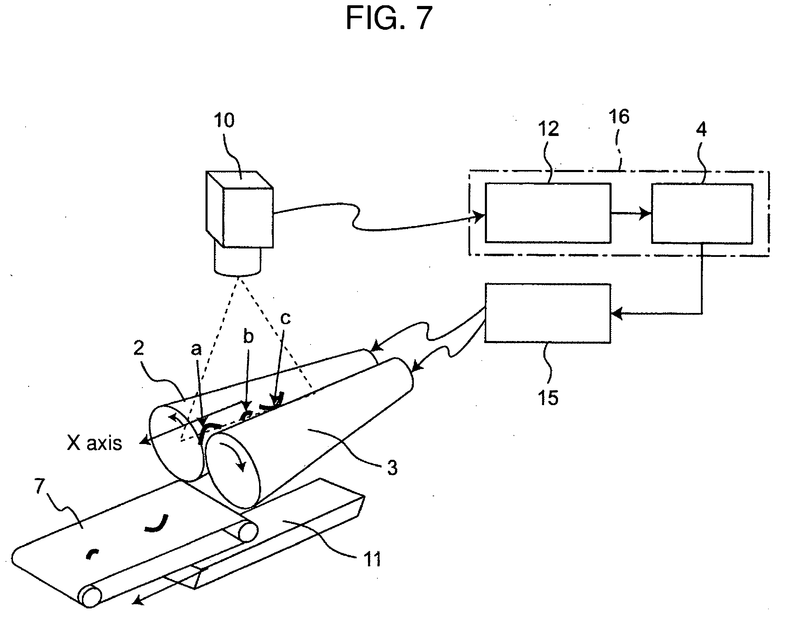

FIG. 7 is a schematic configuration view of device 1 in an example according to the present invention.

In the present example, each of rollers 2 and 3 has an end face with a diameter d1 = d3 = 60 mm on the object introduction side and another end face with a diameter d2 = d4 = 100 mm on the subsequent-process side. The surfaces of rollers 2 and 3 have a static friction coefficient $\mu$ of 0.7. Clearance 8 between rollers 2 and 3 has a width of 3 mm. The axis angle $\varphi$ is 4°. The traveling angle $\theta$ is 5°.

The objects "a" to "c" to be transported are crushed copper objects which are one kind of objects crushed for recycling in recycling plants. The crushed copper objects are made by crushing copper tubes of various shapes such as bar-shaped, L-shaped, and a combination of different shapes.

The objects "a", "b", and "c" have lengths of 15 mm, 18 mm, and 17 mm, respectively, in the transporting direction X.

CCD camera 10 is used as an example of sensor 5 for recognizing the objects "a" to "c", and light source 11 is provided bellow rollers 2 and 3, so that CCD camera 10 can capture the silhouettes (contours) of the objects "a" to "c". Light source 11 emits light in the upward direction to rollers 2 and 3 so that CCD camera 10 can take an image of the objects "a" to "c".

CCD camera 10 is set to cover the area of, for example, 100 mm from the end of rollers 2 and 3 on the subsequent-process side to detect the objects "a" to "c" moving in the X-axis.

The image captured by CCD camera 10 is analyzed by image processor 12, which is an example of information processor 6. Driving device 15 changes the circumferential velocity of rollers 2 and 3 under the control of drive control device 4 according to the analysis results.

As subsequent process 7, a sorting process using an automatic sorting device is provided. To ensure accurate sorting by this sorting device, objects need to be supplied to the sorting process at time intervals of at least a predetermined length depending on the capacity of the sorting device. The sorting device used in the present example requires predetermined time intervals "t" of at least four seconds.

The circumferential velocity of rollers 2 and 3 can be, for example, 4200 mm/s during the normal operation. An arrival time interval "$\Delta t$" indicates the time interval after an object is transported to subsequent process 7 and until the next object arrives at the end on the subsequent-process side of rollers 2 and 3. When information processor 6 determines that the arrival time interval "Δt" is shorter than the predetermined time interval "t", driving device 15 changes the circumferential velocity of rollers 2 and 3 to 840 mm/s to increase the distance between the two objects under the control of drive control device 4.

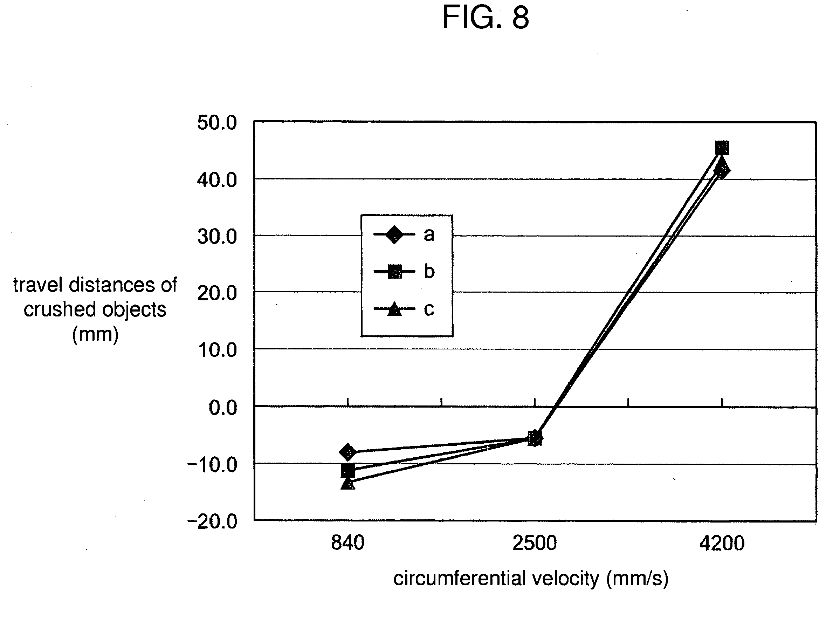

FIG. 8 is a diagram of travel distances of the objects "a" to "c", transported in ten seconds with respect to the difference in the circumferential velocity of rollers 2 and 3. In FIG. 8, the horizontal axis represents the circumferential velocity of rollers 2 and 3, and the vertical axis represents the travel distances of the objects "a" to "c" transported in ten seconds. In the vertical axis, the transporting direction X is positive, and the direction opposite to the direction X is negative.

Although the moving velocities of the objects "a" to "c" are affected by their size and shape, it has been confirmed that these objects move fast in the transporting direction X at a circumferential velocity of 4200 mm/s and move in the direction opposite to the direction X at a circumferential velocity of 840 mm/s.

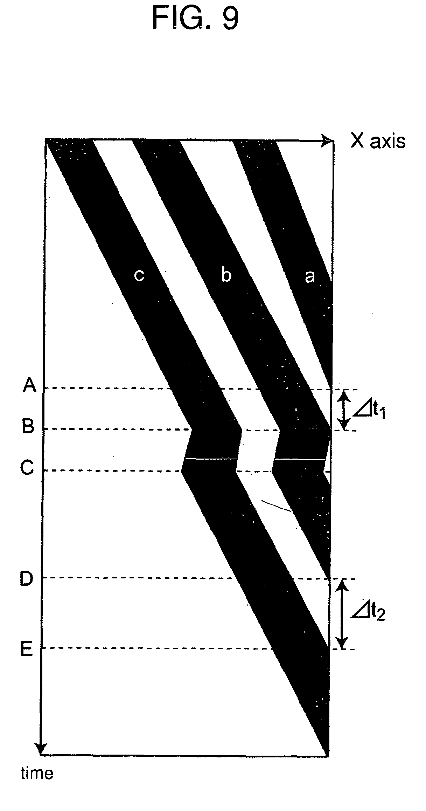

FIG. 9 is a schematic diagram of an example of an image captured by CCD camera 10 and then analyzed by image processor 12 in the present example. In FIG. 9, the horizontal axis represents the area detected by CCD camera 10, and the vertical axis represents the elapsed time. The reference mark "a" in FIG. 9 represents the object "a" being transported. The width in the X-axis direction represents the length of the object "a" in the transporting direction X, and FIG. 9 indicates that the object "a" is moving in the direction X with time. This holds true for the reference marks "b" and "c".

The objects "a" to "c" supplied to device 1 sequentially move on rollers 2 and 3. The time when the last object "c" entirely enters the area of detection by CCD camera 10 is referred to as a time of 0.

About 14 seconds later, at a time A in FIG. 9, the object "a" entirely moves out of the image captured by CCD camera 10 and is transported to subsequent process 7.

About another two seconds later, at a time B in FIG. 9, the object "b" arrives at the end on the subsequent-process side of rollers 2 and 3, which corresponds to the right end of the image captured by CCD camera 10.

Image processor 12 calculates the elapsed time from the time A to the time B in FIG. 9, that is, an arrival time interval "$\Delta t_1$" between the objects "a" and "b". Image processor 12 then compares the arrival time interval "$\Delta t_1$" with the predetermined time interval "t", which is an example of the predetermined threshold value. In this case, "$\Delta t_1$" is two seconds, and "t" is four seconds. To satisfy a relation of $\Delta t_1 > t$, image processor 12 determines that the distance between the objects "a" and "b" should be increased.

On the basis of the determination results, image processor 12 sends a drive control signal to driving device 15 so that at the time B, drive control device 4 can change the circumferential velocity of rollers 2 and 3 from 4200 mm/s to 840 mm/s.

Then, driving device 15 rotates rollers 2 and 3 based on the drive control signal, so that the objects "b" and "c" on rollers 2 and 3 move in the direction opposite to the transporting direction X. FIG. 9 shows that the objects "b" and "c" move in the direction opposite to the direction X from the time B to a time C.

The time period during which the circumferential velocity of rollers 2 and 3 is 840 mm/s is two seconds, which is obtained by the subtraction of the arrival time interval "$\Delta t_1$" from the predetermined time interval "t". When this time period has passed, the circumferential velocity is returned to 4200 mm/s. FIG. 9 shows that the objects "b" and "c" again move in the transporting direction X from the time C onward.

About six seconds later, FIG. 9 shows that the object "b" entirely moves out of the image captured by CCD camera 10 and is transported to subsequent process 7 at a time D.

About another five seconds later, at a time E in FIG. 9, the object "c" arrives at the end of the subsequent-process side of rollers 2 and 3, which corresponds to the right end of the image captured by CCD camera 10.

Image processor 12 calculates the elapsed time from the time D to the time E in FIG. 9, that is, an arrival time interval "$\Delta t_2$" between the objects "b" and "c". Image processor 12 then compares the arrival time interval "$\Delta t_2$" with the predetermined time interval "t". In this case, "$\Delta t_2$" is five seconds, and "t" is four seconds. Since there is a relation of $\Delta t_2 > t$, image processor 12 determines that the distance between the objects "b" and "c" does not need to be increased. As a result, the circumferential velocity of rollers 2 and 3 is maintained at 4200 mm/s. FIG. 9 shows that the object "c" continues to move in the transporting direction X and is transported to subsequent process 7 also after the time E.

As a result of the above-described operation, the objects "a" and "b" are transported at an interval of about ten seconds, and the objects "b" and "c" are transported at an interval of about nine seconds to subsequent process 7. Thus, the objects "a" and "b", and the objects "b" and "c" are each transported to subsequent process 7 at an interval of at least the predetermined time interval "t" one by one.

The present invention is not limited to the above exemplary embodiment and can be embodied in various other exemplary embodiments.

For example, the objects to be transported in the present example are crushed copper objects, but may alternatively be other objects crushed for recycling such as resin fragments and iron scraps, or foods such as fruits and vegetables.

The CCD camera is used as an example of sensor 5, but may any other device capable of detecting the size of objects to be transported and the distance between them. For example, an infrared sensor can be disposed at the end on the subsequent-process side of rollers 2 and 3, and another infrared sensor at any position through which the objects pass. The infrared sensor on the object introduction side detects the size of each object from the time during which infrared rays are blocked. This approach can produce the same effect as in the present example where the CCD camera is used for detection.

In the present example, the circumferential velocity of rollers 2 and 3 has two levels: 4200 mm/s and 840 mm/s. Alternatively, this velocity can be changed depending on the shape of each object, or the surface material or surface roughness of rollers 2 and 3. Alternatively, the circumferential velocity has three or more levels.

Any one of the various exemplary embodiments and any one of the modified examples described above can be combined to obtain their advantages.

As described above, the method for transporting objects according to the present invention enables the objects one by one to a subsequent process at time intervals of at least a predetermined length by adjusting the circumferential velocity of the tapered cylindrical rollers. This method can be applied not only to objects of different shapes and sizes that are crushed for recycling but also to foods such as vegetables and fruits. This method can be further applied to transport objects of similar shapes and sizes one by one to a subsequent process at constant time intervals.

## Claims

1. A method for transporting a plurality of objects (a, b, c, d) using a device (1) for transporting objects, the device (1) including:

    two tapered cylindrical rollers (2, 3) spaced from each other provided with a clearance (8) having a constant width therebetween, each of the rollers (2, 3) gradually increasing in diameter from a first end to a second end; a driving device (15) for driving the rollers (2,3), and
    wherein the objects (a, b, c, d) are introduced at the first ends of the rollers (2, 3) and transported one by one to a subsequent process (7) after passing through the second ends of the rollers (2, 3) by rotating the rollers (2, 3) in an upward direction in the clearance (8),

    the method comprising:

    rotating the rollers (2, 3) by the driving device (15) to start transporting the objects (a, b, c, d); **characterized in that**, the method comprises:

        a processing control device (16) for adjusting a circumferential velocity of the rollers (2, 3);
        detecting sizes of two objects closest and second closest to the subsequent process (7) and a distance (9) between the two objects (a, b) by an inter-object distance detection sensor (5) while the two objects (a, b) are being transported by the rollers (2, 3);
        comparing the distance (9) between the two objects (a, b) with a threshold (t) value by the processing control device (16), based on information obtained by the inter-object distance detection sensor (5);
        determining by the processing control device (16) that the distance (9) between the two objects (a, b) needs to be increased when the distance (9) is not more than the threshold value (t); and that the distance (9) between the two objects (a, b) needs to be decreased when the distance (9) exceeds the threshold value (t); and
        sending a signal for slowing the circumferential velocity of the rollers (2, 3) from the processing control device (16) to the driving device (15) when the distance (9) between the two objects (a, b) needs to be increased, and sending a signal for quickening the circumferential velocity of the rollers (2, 3) from the processing control device (16) to the driving device (15) when the distance (9) between the two objects (a, b) needs to be decreased, so that the plurality of objects (a, b, c, d) can be transported by the driving device (15) one by one to the subsequent process (7) at time intervals ($\Delta t$) of at least a predetermined length, after passing through the second end.

2. The method according to claim 1, wherein the driving device (15) rotates the rollers (2, 3) to start transporting the plurality of objects (a, b, c, d) under a condition that an angle $\theta$ between a transporting direction of the objects and a horizontal plane satisfies $0° < \theta \leq 40°$ with respect to the horizontal plane in a downward direction.

3. The method according to claim 1 or 2, wherein when the driving device (15) rotates the rollers (2, 3) to start transporting the plurality of objects, (a, b, c, d) objects crushed for recycling are transported as one kind of the plurality of objects (a, b, c, d).

**EP 2 947 032 B1**

**Patentansprüche**

1. Verfahren zum Transport mehrerer Objekte (a, b, c, d) unter Anwenden einer Vorrichtung (1) für den Transport von Objekten, wobei die Vorrichtung (1) Folgendes aufweist:

   zwei kegelige zylindrische Rollen (2, 3), beabstandet zueinander mit einem bereitgestellten Zwischenraum (8) von konstanter Breite dazwischen, wobei jede der Rollen (2, 3) einen von einem ersten bis zu einem zweiten Ende schrittweise zunehmenden Durchmesser aufweist;
   eine Antriebsvorrichtung (15) zum Antreiben der Rollen (2, 3), und
   wobei die Objekte (a, b, c, d) an den ersten Enden der Rollen (2, 3) eingeführt und nach Passage der zweiten Enden der Rollen (2, 3) einzeln einem nachfolgenden Verfahren (7) zugeleitet werden, indem die Rollen (2, 3) in einer Aufwärtsrichtung im Zwischenraum (8) gedreht werden,

   wobei das Verfahren Folgendes aufweist:

   Rotieren der Rollen (2, 3) durch die Antriebsvorrichtung (15) zum Starten des Transports der Objekte (a, b, c, d); **dadurch gekennzeichnet, dass** das Verfahren Folgendes aufweist:

   eine Verfahrenssteuervorrichtung (16) zum Einstellen einer Umfangsgeschwindigkeit der Rollen (2, 3),
   Erkennen der Größen von zwei Objekten (a, b) am nächsten und zweitnächsten zum nachfolgenden Verfahren (7) und eines Abstands (s) zwischen den zwei Objekten (a, b) durch einen Interobjekt-Abstands-Erkennungssensor (5), während die zwei Objekte (a, b) von den Rollen (2, 3) transportiert werden;
   Vergleichen des Abstands (9) zwischen den zwei Objekten (a, b) mit einem Schwellenwert (t) durch die Verfahrenssteuervorrichtung (16) auf Basis von durch den Interobjekt-Abstands-Erkennungssensor (5) erhaltener Information;
   Bestimmen durch die Verfahrenssteuervorrichtung (16), dass der Abstand (9) zwischen den zwei Objekten (a, b) vergrößert werden muss, wenn der Abstand (9) nicht mehr als der Schwellenwert (t) beträgt, und dass der Abstand (9) zwischen den zwei Objekten (a, b) verkleinert werden muss, wenn der Abstand (9) den Schwellenwert (t) überschreitet; und
   Senden eines Signals von der Verfahrenssteuervorrichtung (16) an die Antriebsvorrichtung (15) zum Verringern der Umfangsgeschwindigkeit der Rollen (2, 3), wenn der Abstand (9) zwischen den zwei Objekten (a, b) vergrößert werden muss, und Senden eines Signals von der Verfahrenssteuervorrichtung (16) an die Antriebsvorrichtung (15) zum Erhöhen der Umfangsgeschwindigkeit der Rollen (2, 3), wenn der Abstand (9) zwischen den zwei Objekten (a, b) verkleinert werden muss, so dass die mehreren Objekte (a, b, c, d) durch die Antriebsvorrichtung (15) einzeln einem nachfolgenden Verfahren (7) zu Zeitintervallen ($\Delta$t) von mindestens einer im Voraus bestimmten Länge nach der Passage des zweiten Endes transportiert werden.

2. Verfahren nach Anspruch 1, wobei die Antriebsvorrichtung (15) die Rollen (2, 3) dreht, um den Transport der mehreren Objekte (a, b, c, d) unter einer Bedingung zu starten, dass ein Winkel $\theta$ zwischen einer Transportrichtung der Objekte und einer Horizontalebene $0° < \theta \leq 40°$ in Bezug auf die Horizontalebene in einer Abwärtsrichtung erfüllt.

3. Verfahren nach Anspruch 1 oder 2, wobei, wenn die Antriebsvorrichtung (15) die Rollen (2, 3) dreht, um den Transport der mehreren Objekte (a, b, c, d) zu starten, für Recycling zerdrückte Objekte als eine Sorte der mehreren Objekte (a, b, c, d) transportiert wird.

**Revendications**

1. Procédé pour transporter une pluralité d'objets (a, b, c, d) en utilisant un dispositif (1) pour transporter des objets, le dispositif (1) comprenant :

   deux rouleaux cylindriques progressivement rétrécis (2, 3) espacés l'un de l'autre, prévus avec un jeu (8) ayant une largeur constante entre eux, chacun des rouleaux (2, 3) augmentant progressivement du point de vue du diamètre, d'une première extrémité à une seconde extrémité ;
   un dispositif d'entraînement (15) pour entraîner les rouleaux (2, 3) ; et
   dans lequel les objets (a, b, c, d) sont introduits au niveau des premières extrémités des rouleaux (2, 3) et transportés un à un jusqu'à un procédé suivant (7) après être passés par les secondes extrémités des rouleaux (2, 3) en faisant tourner des rouleaux (2, 3) dans une direction ascendante dans le jeu (8),

9

le procédé comprenant les étapes consistant à :

faire tourner les rouleaux (2, 3) par le dispositif d'entraînement (15) pour commencer le transport des objets (a, b, c, d) ; **caractérisé en ce que** le procédé comprend :

un dispositif de commande de traitement (16) pour ajuster une vitesse circonférentielle des rouleaux (2, 3), l'étape consistant à détecter les tailles des deux objets (a, b) les plus proches et des seconds les plus proches du procédé suivant (7), et une distance (9) entre les deux objets (a, b) par un capteur de détection de distance entre les objets (5) alors que les deux objets (a, b) sont transportés par les rouleaux (2, 3) ;

l'étape consistant à comparer la distance (9) entre les deux objets (a, b) avec une valeur de seuil (t) par le dispositif de commande de traitement (16), en fonction de l'information obtenue par le capteur de détection de distance entre les objets (5) ;

l'étape consistant à déterminer par le dispositif de commande de traitement (16) que la distance (9) entre les deux objets (a, b) doit être augmentée lorsque la distance (9) n'est pas supérieure à la valeur de seuil (t), et que la distance (9) entre les deux objets (a, b) doit être diminuée lorsque la distance (9) augmente la valeur de seuil (t), et

l'étape consistant à envoyer un signal pour ralentir la vitesse circonférentielle des rouleaux (2, 3) du dispositif de commande de traitement (16) au dispositif d'entraînement (15) lorsque la distance (9) entre les deux objets (a, b) doit être augmentée, et envoyer un signal pour accélérer la vitesse circonférentielle des rouleaux (2, 3) du dispositif de commande de traitement (16) au dispositif de d'entraînement (15) lorsque la distance (9) entre les deux objets (a, b) doit être diminuée, de sorte que la pluralité d'objets (a, b, c, d) peuvent être transportés par le dispositif d'entraînement (15) un à un jusqu'au procédé suivant (7) à intervalles de temps ($\Delta$t) d'au moins une longueur prédéterminée, après être passés par la seconde extrémité.

2. Procédé selon la revendication 1, dans lequel le dispositif d'entraînement (15) fait tourner les rouleaux (2, 3) pour commencer le transport de la pluralité d'objets (a, b, c, d) dans une condition dans laquelle un angle θ entre une direction de transport des objets et un plan horizontal satisfait 0° < θ ≤ 40° par rapport au plan horizontal dans la direction descendante.

3. Procédé selon la revendication 1 ou 2, dans lequel lorsque le dispositif d'entraînement (15) fait tourner les rouleaux (2, 3) pour commencer le transport de la pluralité d'objets (a, b, c, d) les objets écrasés pour le recyclage sont transportés au titre d'un type de la pluralité d'objets (a, b, c, d).

FIG. 1

EP 2 947 032 B1

# FIG. 2

# FIG. 3

# FIG. 4

# FIG. 5

EP 2 947 032 B1

# FIG. 6

# FIG. 7

EP 2 947 032 B1

# FIG. 8

# FIG. 9

# FIG. 10

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011162339 A

- WO 2007052818 A1